# EUROPEAN PATENT APPLICATION

(11) **EP 3 747 724 A1**
(43) Date of publication of application: **09.12.2020**
(21) Application number: 20760363.0
(22) Date of filing: 16.01.2020
(51) Int. Cl.: B61D 35/00

(54) **MULTIPLE-UNIT TRAIN AND CHASSIS END INTEGRATION DEVICE THEREOF**

(30) Priority: 26.02.2019 CN 201910141721; 26.02.2019 CN 201920243122 U
(71) Applicant: CRRC Changchun Railway Vehicles Co., Ltd., Changchun, Jilin 130000 (CN)
(72) Inventor: WANG, Chengqiang, Changchun, Jilin 130000 (CN); ZHU, Yan, Changchun, Jilin 130000 (CN); LIU, Jinzhu, Changchun, Jilin 130000 (CN); DENG, Hai, Changchun, Jilin 130000 (CN); XU, Peng, Changchun, Jilin 130000 (CN)
(74) Representative: Behr, Wolfgang
(86) International application number: PCT/CN2020/072389
(87) International publication number: WO 2020/173238

(57) **Abstract**

A multiple-unit train and an underframe end integration device thereof are disclosed according to the present application. The underframe end integration device includes: a sewage tank (1) and a sewage tank hanging joint (3). The sewage tank (1) is an irregular-shaped sewage tank (1), and when mounted at the vehicle underframe end portion (2), the sewage tank (1) is able to be in close contact with the vehicle underframe end portion (2). The sewage tank hanging joint (3) is integrally formed with a traction beam (201) at the vehicle underframe end portion (2), and the sewage tank (1) is mounted on the vehicle underframe end portion (2) through the sewage tank hanging joint (3), thereby increasing the storage space of the sewage tank (3) and avoiding the deterioration of the strength of the vehicle underframe in the direction of transmitting longitudinal force.

## Description

The present application claims the benefit of priorities to the following two Chinese patent applications, both of which are incorporated herein by reference in their entireties,
1) Chinese Patent Application No. 201910141721.7, titled "MULTIPLE-UNIT TRAIN AND UNDERFRAME END INTEGRATION DEVICE THEREOF", filed with the China National Intellectual Property Administration on February 26, 2019, and
2) Chinese Patent Application No. 201920243122.1, titled "MULTIPLE-UNIT TRAIN AND UNDERFRAME END INTEGRATION DEVICE THEREOF", filed with the China National Intellectual Property Administration on February 26, 2019.

### FIELD

The present application relates to the technical field of railway transportation, and in particular to a multiple-unit train and an underframe end integration device thereof.

### BACKGROUND

With the development of transport operation of high-speed multiple-unit trains, the frequency of daily use of multiple-unit trains has increased, and the utilization rate of water-supply sanitation system has increased. At present, most of the lavatories in China's multiple-unit trains are arranged at the vehicle underframe ends (in each carriage), and the sewage tank for collecting sewage is square. The sewage tank is mounted by providing a hanging hole in the vehicle underframe. Due to the narrow space of the vehicle underframe end portion, the space for containing the sewage tank is small, and the hanging hole provided in the vehicle underframe results in the deterioration of the strength of the vehicle underframe in a direction of transmitting longitudinal force.

Therefore, how to increase the storage space of the sewage tank and avoid the deterioration of the strength of the vehicle underframe in the direction of transmitting longitudinal force is an urgent technical problem to be solved by those skilled in the art.

### SUMMARY

In view of this, a first object of the present application is to provide an underframe end integration device, which can increase the storage space of the sewage tank and avoid the deterioration of the strength of the vehicle underframe in the direction of transmitting longitudinal force.

A second object of the present application is to provide a multiple-unit train.

In order to achieve the first object mentioned above, the following solutions are provided according to the present application.

An underframe end integration device includes:
a sewage tank, wherein the sewage tank is an irregular-shaped sewage tank for containing sewage, and when mounted at the vehicle underframe end portion, the sewage tank is able to be in close contact with the vehicle underframe end portion; and
a sewage tank hanging joint, wherein the sewage tank hanging joint is integrally formed with a traction beam at the vehicle underframe end portion, and the sewage tank is mounted on the vehicle underframe end portion through the sewage tank hanging joint.

In a specific embodiment, the sewage tank surrounds the sewage tank hanging joint.

In another specific embodiment, the underframe end integration device further includes snap-in connectors and a mounting frame;
multiple snap-in connectors are provided and mounted on the mounting frame, and are configured to connect high-voltage cables between adjacent carriages of the multiple-unit train with bridge cables penetrating in from outside the multiple-unit train; and
the mounting frame is mounted on the vehicle underframe end portion and is located between the sewage tank and the traction beam.

In another specific embodiment, the mounting frame includes a horizontal mounting plate and a vertical mounting plate which are vertically connected;
the horizontal mounting plate is mounted on the vehicle underframe end portion; and
the snap-in connectors are uniformly distributed on the vertical mounting plate.

In another specific embodiment, the underframe end integration device further includes a movable skirt plate mounted on the vehicle underframe end portion and configured to cover the snap-in connectors.

In another specific embodiment, the movable skirt plate is slidably mounted on the traction beam.

In another specific embodiment, the traction beam and the sewage tank hanging joint are in an integrated extrusion profile structure.

In another specific embodiment, the sewage tank and the sewage tank hanging joint are detachably connected by profile nuts and screws.

In another specific embodiment, the sewage tank is provided with an inlet pipe in communication with a sewage discharge pipe of the multiple-unit train;
the bottom of the sewage tank is provided with a sewage outlet for discharging the sewage in the sewage tank, and the sewage outlet is provided with a cover for opening and closing the sewage outlet; and/or,
the sewage discharge pipe is further provided with a switch valve, and the sewage discharge pipe is further connected with a purge pipe, wherein the purge pipe is positioned between the switch valve and the inlet pipe, and an inlet of the purge pipe can be connected to an air source.

Various embodiments according to the present application can be arbitrarily combined as required, and the embodiments obtained after these combinations are also within the scope of the present application and are part of the specific embodiments of the present application.

Not limited to any theory, it can be seen from the above disclosure that, in the underframe end integration device disclosed by the present application, as the sewage tank containing the sewage has an irregular-shaped structure, and when the sewage tank is mounted at the vehicle underframe end portion, the sewage tank can be in close contact with the vehicle underframe end portion, which increases the storage space of the sewage tank. In addition, the sewage tank hanging joint is integrally formed with the traction beam of the vehicle underframe, which avoids the deterioration of the strength of the vehicle underframe in the direction of transmitting longitudinal force caused by providing holes in the traction beam. In summary, the underframe end integration device provided by the present application increases the storage space of the sewage tank and avoids the deterioration of the strength of the vehicle underframe in the direction of transmitting longitudinal force.

In order to achieve the second object mentioned above, the following solution is provided according to the present application.

A multiple-unit train includes the underframe end integration device according to any one of the above aspects.

Since the multiple-unit train provided by the present application includes the underframe end integration device according to any one of the above aspects, the beneficial effects of the underframe end integration device mentioned above are all included in the multiple-unit train provided by the present application.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawings without any creative efforts.
Figure 1 is a schematic front view of a sewage tank of an underframe end integration device provided by the present application;
Figure 2 is a schematic left view of Figure 1;
Figure 3 is a schematic top view of Figure 2;
Figure 4 is a schematic front view of the integrally formed structure of the traction beam and the sewage tank hanging joint of the underframe end integration device provided by the present application;
Figure 5 is a schematic sectional view of Figure 4 taken along line A-A;
Figure 6 is a schematic sectional view of Figure 4 taken along line B-B;
Figure 7 is a schematic top view of Figure 4;
Figure 8 is a schematic front view of the underframe end integration device of the present application without snap-in connectors;
Figure 9 is a schematic sectional view of Figure 8 taken along line C-C;
Figure 10 is a partially enlarged view of Figure 9;
Figure 11 is a schematic top view of Figure 8;
Figure 12 is a schematic front view of the assembly of the snap-in connectors and the mounting frame of the underframe end integration device of the present application;
Figure 13 is a schematic left view of Figure 12;
Figure 14 is a schematic perspective view of the assembly of the snap-in connectors and the mounting frame of the underframe end integration device of the present application;
Figure 15 is a schematic front view of the underframe end integration device of the present application; and
Figure 16 is a schematic sectional view of Figure 15 taken along line D-D.

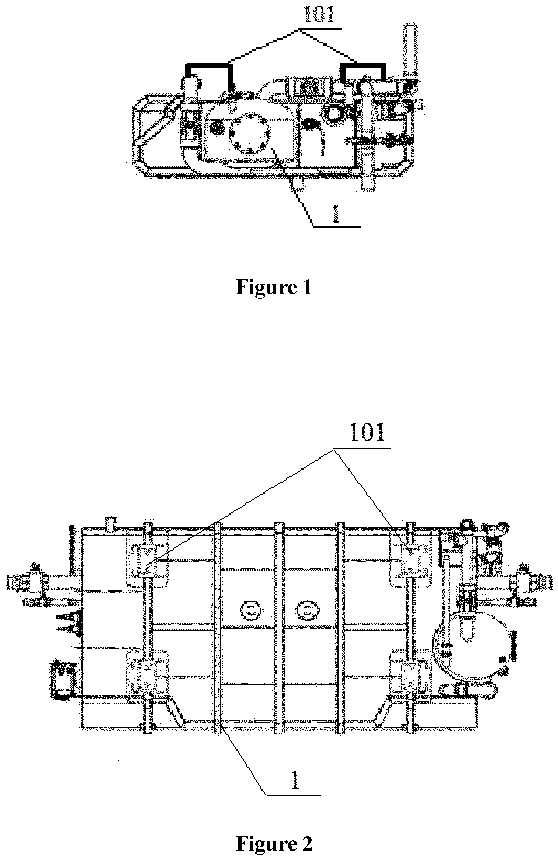

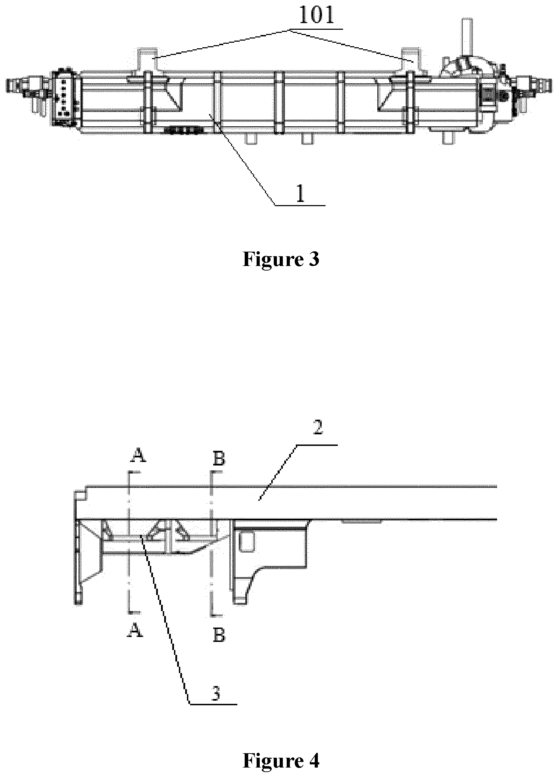

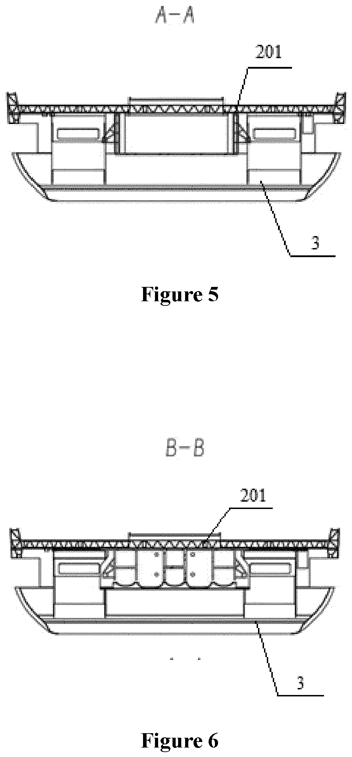

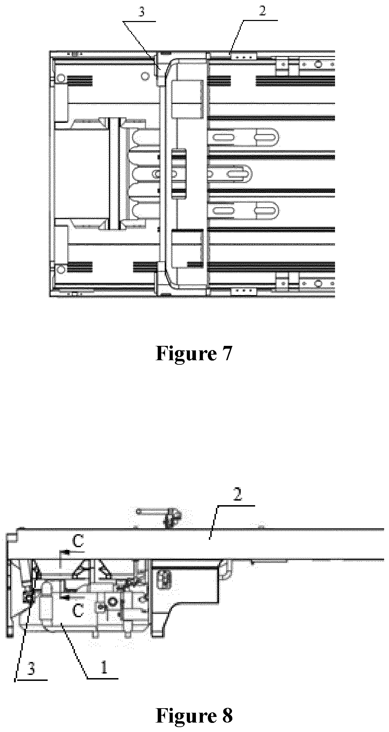

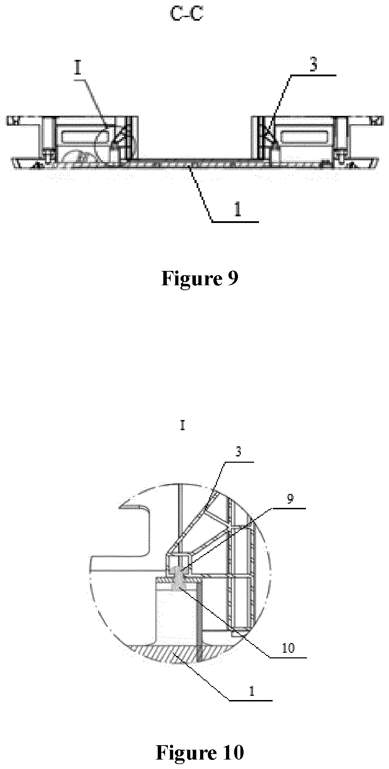

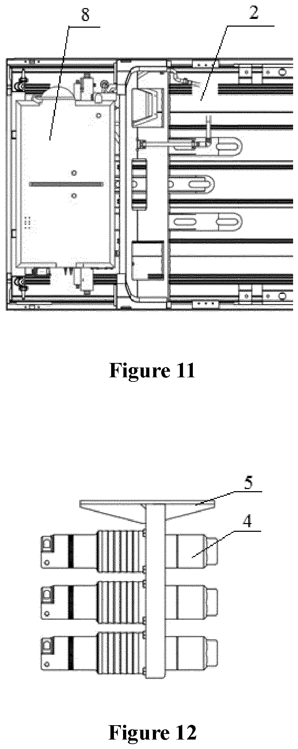

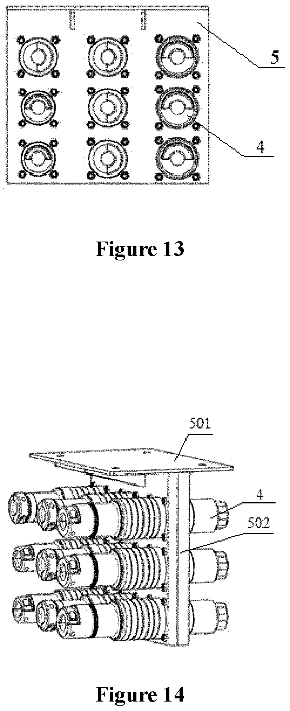

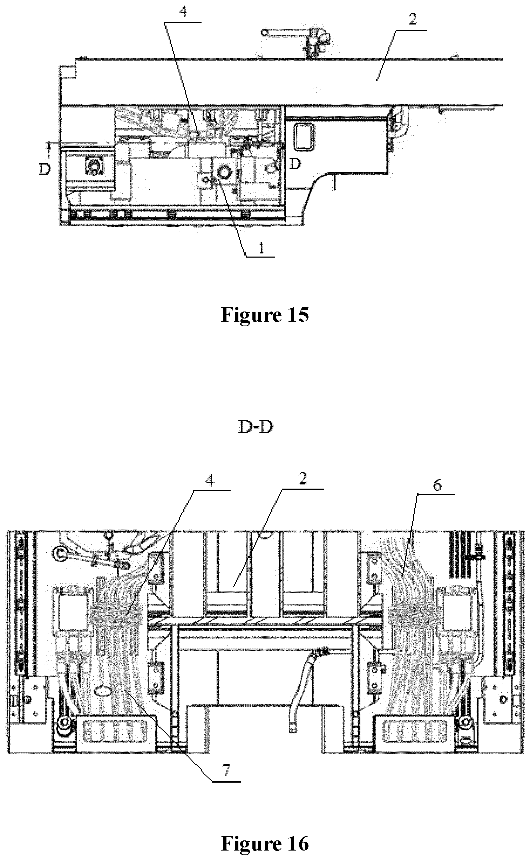

Reference numerals in Figures 1 to 16:

| | |
|---|---|
| 1 sewage tank, | 101 inverted U-shaped plate, |
| 2 vehicle underframe end portion, | 201 traction beam, |
| 3 sewage tank hanging joint, | 4 snap-in connector, |
| 5 mounting frame, | 6 high-voltage cable, |
| 7 bridge cable, | 501 horizontal mounting plate, |
| 502 vertical mounting plate, | 8 movable skirt plate, |
| 9 profile nut, | 10 screw. |

### DETAILED DESCRIPTION OF EMBODIMENTS

In order to make those skilled in the art better understand the technical solution of the present application, the present application will be further described in detail with reference to the drawings and specific embodiments.

### First Embodiment

As shown in Figures 1 to 16, the present application discloses an underframe end integration device used for various multiple-unit trains or trains. The underframe end integration device includes a sewage tank 1 and a sewage tank hanging joint 3.

The sewage tank 1 is an irregular-shaped sewage tank for containing sewage. Specifically, the sewage tank 1 is in communication with a sewage discharge pipe of the multiple-unit train, and the sewage discharge pipe is used for discharge of sewage from lavatories, washrooms, water heaters, and so on.

The sewage discharged from the sewage discharge pipe can enter the sewage tank 1. The sewage tank 1 has an irregular-shaped structure and is mounted at bottom of the vehicle underframe. The sewage tank is in close contact with the inner wall of the space containing the sewage tank 1 and formed by the vehicle underframe end portion 2. When the sewage tank 1 is mounted at the vehicle underframe end portion 2, the sewage tank 1 can be in close contact with the vehicle underframe end portion 2, thereby maximizing the volume of the sewage tank 1.

The sewage tank hanging joint 3 is integrally formed with the traction beam 201 at the vehicle underframe end portion 2, and the sewage tank 1 is mounted at the vehicle underframe end portion 2 through the sewage tank hanging joint 3. Specifically, the sewage tank hanging joint 3 refers to a structure capable of hanging the sewage tank 1.

In the underframe end integration device disclosed by the present application, as the sewage tank 1 containing the sewage has an irregular-shaped structure, and when the sewage tank 1 is mounted at the vehicle underframe end portion 2, the sewage tank 1 can be in close contact with the vehicle underframe end portion 2, which increases the storage space of the sewage tank 1. In addition, the sewage tank hanging joint 3 is integrally formed with the traction beam 201 of the vehicle underframe, which avoids the deterioration of the strength of the vehicle underframe in the direction of transmitting longitudinal force caused by providing holes in the traction beam 201. In summary, the underframe end integration device provided by the present application increases the storage space of the sewage tank and avoids the deterioration of the strength of the vehicle underframe in the direction of transmitting longitudinal force.

### Second Embodiment

In the second embodiment provided by the present application, the underframe end integration device in this embodiment is similar in structure to the underframe end integration device in the first embodiment, so the similarities will not be described again, and only the differences will be introduced.

In this embodiment, the present application specifically discloses an arrangement in which the sewage tank 1 surrounds the sewage tank hanging joint 3. Specifically, the sewage tank hanging joint 3 is arranged in a middle area of the sewage tank 1, which has a compact structure and saves space.

Further, the underframe end integration device disclosed by the present application further includes snap-in connectors 4 and a mounting frame 5. The snap-in connectors 4 are configured to connect high-voltage cables 6 between adjacent carriages of the multiple-unit train with bridge cables 7 penetrating in from outside the multiple-unit train. Multiple snap-in connectors 4 are provided and mounted on the mounting frame 5. The mounting frame 5 is mounted on the vehicle underframe end portion 2 and is located between the sewage tank 1 and the traction beam 201. That is, the wires and cables are placed in the space between the sewage tank 1 and the traction beam 201 by providing the snap-in connectors 4 and the mounting frame 5, which reduces the occupied space of the wires and cables and further increases the size of the sewage tank 1. In addition, the high-voltage cables 6 between adjacent carriages and the bridge cables 7 penetrating in from the outside of the multiple-unit train are connected through the snap-in connectors 4, which facilitates disassembly and maintenance.

Further, the mounting frame 5 disclosed by the present application includes a horizontal mounting plate 501 and a vertical mounting plate 502 which are vertically connected. The horizontal mounting plate 501 is mounted at the bottom of the vehicle underframe end portion 2. The snap-in connectors 4 are uniformly distributed on the vertical mounting plate 502. Specifically, the number of the snap-in connectors 4 can be increased or decreased according to specific conditions. In order to facilitate the disassembly and assembly of the snap-in connectors 4, the snap-in connectors 4 disclosed by the present application are fixed on the vertical mounting plate 502 by screws 10.

Further, in order to increase the connection strength between the vertical mounting plate 502 and the horizontal mounting plate 501, reinforcing ribs are provided at the connection between the horizontal mounting plate 501 and the vertical mounting plate 502.

It should be noted that the mounting frame 5 may also be formed by splicing multiple aluminum alloy profiles, and the snap-in connectors 4 are mounted on the aluminum alloy profiles by screws 10.

Further, the underframe end integration device disclosed by the present application further includes a movable skirt plate 8 mounted on the vehicle underframe end portion 2 and configured to cover the snap-in connectors 4. Specifically, the movable skirt plate 8 is provided on two sides of the vehicle underframe end portion 2.

Specifically, the movable skirt plate 8 is slidably mounted on the traction beam 201, and the movable skirt plate 8 can be opened and closed by pulling, which facilitates line maintenance. Further, in order to prevent the movable skirt plate 8 from slipping off, position-limiting plates or position-limiting blocks are provided at two extreme positions of the movable skirt plate 8.

It should be noted that the movable skirt plates 8 may be hinged to the traction beam 201, and a locking device capable of locking the movable skirt plate 8 may be provided.

Further, the traction beam 201 and the sewage tank hanging joint 3 are in an integrated extrusion profile structure, which facilitates connection with the sewage tank 1.

Specifically, the sewage tank 1 and the sewage tank hanging joint 3 are detachably connected by profile nuts 9 and screws 10, which can adapt to the connection of different parts of the sewage tank 1 to the sewage tank hanging joint 3. The sewage tank 1 is provided with an inverted U-shaped plate 101, and the screw 10 passes through the inverted U-shaped plate 101 and is fixed to the sewage tank hanging joint 3.

Further, the sewage tank 1 is provided with an inlet pipe in communication with the sewage discharge pipe of the multiple-unit train. Specifically, the sewage discharge pipe of the multiple-unit train is used for discharge of sewage from lavatories, washrooms, water heaters, and so on.

The bottom of the sewage tank 1 is provided with a sewage outlet for discharging the sewage in the sewage tank 1, and the sewage outlet is provided with a cover for opening and closing the sewage outlet, which facilitates discharge all the sewage in the sewage tank 1.

Further, the sewage discharge pipe is further provided with a switch valve, the sewage discharge pipe is further connected with a purge pipe, the purge pipe is positioned between the switch valve and the inlet pipe, and an inlet of the purge pipe can be connected to an air source. When the sewage discharge pipe or the inlet pipe is blocked, the sewage discharge pipe or the inlet pipe can be dredged by connecting an air source at the purge pipe.

The present application has the following advantages.
(1) The sewage tank hanging joint 3 and the traction beam 201 are in an integrated extrusion profile structure, which has no welding seam and has high strength. With this structure, the vehicle underframe end portion 2 not only meets the functions of coupler connection and longitudinal force transmission, but also can hoist the sewage tank 1.
(2) The sewage tank 1 is placed below the vehicle underframe end portion 2 and is made into an irregular-shaped structure, which can make full use of the end portion space.
(3) As the water purification system (including washroom, water heater, and so on) and the lavatory system are located at the vehicle end, when these systems are drained, the sewage therein needs to be discharged into the sewage tank 1 through the sewage discharge pipe (drain pipe and sewage pipe) and the inlet pipe. The sewage tank 1 is placed below the vehicle underframe end portion 2, which can greatly shorten the length of the sewage discharge pipe, solves the problem of blockage, has strong suction capacity, and improves the efficiency of drainage and sewage discharge, thereby greatly saving the air consumption of vacuum drainage and sewage discharge and saving energy.
(4) The sewage tank hanging joint is arranged in the middle area of the sewage tank 1, which has a compact structure, saves space, reduces weight, and has high strength.
(5) The skirt plate on two sides of the vehicle underframe end portion 2 is changed into the movable skirt plate 8, which facilitate the mounting and maintenance of the cables and the snap-in connectors 4. The cables and the snap-in connectors 4 are located above the sewage tank 1, so the mounting, use and maintenance do not affect each other, and the operation space is sufficient.
(6) The use of the snap-in connectors 4 facilitates maintenance and mounting.

### Third Embodiment

A multiple-unit train is provided by the present application, which includes the underframe end integration device according to any one of the above embodiments.

Since the multiple-unit train provided by the present application includes the underframe end integration device according to any one of the above embodiments, the beneficial effects of the underframe end integration device mentioned above are all included in the multiple-unit train provided by the present application.

In the present application, the terms "first", "second" and the like are only used to distinguish in description and have no other special meanings.

In description of the present application, it should be understood that an orientation or a position relation indicated by terms "bottom" or the like is described based on an orientation or a position relation shown in the drawings, and is only used for describing the present application and simplifying the description, rather than instructing or implying that a device or element related to the terms has a specific orientation or is constructed and operated in a specific orientation. Therefore, the terms should be not construed as limitations to the present application.

The above illustration of the disclosed embodiments can enable those skilled in the art to implement or use the present application. Various modifications to the embodiments are apparent to the person skilled in the art, and the general principle herein can be implemented in other embodiments without departing from the spirit or scope of the present application. Hence, the present application is not limited to the embodiments disclosed herein, but is to conform to the widest scope in accordance with the principles and creative features disclosed herein.

## Claims

1. An underframe end integration device, comprising
a sewage tank (1), wherein the sewage tank (1) is an irregular-shaped sewage tank (1) for containing sewage, and when mounted at a vehicle underframe end portion (2), the sewage tank (1) is able to be in close contact with the vehicle underframe end portion (2); and
a sewage tank hanging joint (3), wherein the sewage tank hanging joint (3) is integrally formed with a traction beam (201) at the vehicle underframe end portion (2), and the sewage tank (1) is mounted on the vehicle underframe end portion (2) through the sewage tank hanging joint (3).

2. The underframe end integration device according to claim 1, wherein the sewage tank (1) surrounds the sewage tank hanging joint (3).

3. The underframe end integration device according to claim 1, further comprising snap-in connectors (4) and a mounting frame (5);
wherein a plurality of snap-in connectors (4) are provided and mounted on the mounting frame (5), and are configured to connect high-voltage cables (6) between adjacent carriages of the multiple-unit train with bridge cables (7) penetrating in from outside the multiple-unit train; and
the mounting frame (5) is mounted on the vehicle underframe end portion (2) and is located between the sewage tank (1) and the traction beam (201).

4. The underframe end integration device according to claim 3, wherein the mounting frame (5) comprises a horizontal mounting plate (501) and a vertical mounting plate (502) which are vertically connected;
the horizontal mounting plate (501) is mounted on the vehicle underframe end portion (2); and
the snap-in connectors (4) are uniformly distributed on the vertical mounting plate (502).

5. The underframe end integration device according to claim 3, further comprising a movable skirt plate (8) mounted on the vehicle underframe end portion (2) and configured to cover the snap-in connectors (4).

6. The underframe end integration device according to claim 5, wherein the movable skirt plate (8) is slidably mounted on the traction beam (201).

7. The underframe end integration device according to claim 1, wherein the traction beam (201) and the sewage tank hanging joint (3) are in an integrated extrusion profile structure.

8. The underframe end integration device according to claim 7, wherein the sewage tank (1) and the sewage tank hanging joint (3) are detachably connected by profile nuts (9) and screws (10).

9. The underframe end integration device according to any one of claims 3 to 6, wherein the sewage tank (1) is provided with an inlet pipe in communication with a sewage discharge pipe of the multiple-unit train;
the bottom of the sewage tank (1) is provided with a sewage outlet for discharging sewage in the sewage tank (1), and the sewage outlet is provided with a cover for opening and closing the sewage outlet; and/or,
the sewage discharge pipe is further provided with a switch valve, and the sewage discharge pipe is further connected with a purge pipe, wherein the purge pipe is positioned between the switch valve and the inlet pipe, and an inlet of the purge pipe is able to be connected to an air source.

10. A multiple-unit train, comprising the underframe end integration device according to any one of claims 1 to 9.
